# EUROPÄISCHE PATENTSCHRIFT

(11) **EP 2 948 847 B1**
(45) Veröffentlichungstag und Bekanntmachung des Hinweises auf die Patenterteilung: **04.09.2019**
(21) Anmeldenummer: 14707679.8
(22) Anmeldetag: 19.02.2014
(51) Int. Cl.: G06F 9/54

(54) **VERFAHREN UND VORRICHTUNG ZUR ÜBERTRAGUNG VON DATENELEMENTEN ZWISCHEN THREADS EINES PARALLELEN RECHNERSYSTEMS**
METHOD AND APPARATUS FOR TRANSMITTING DATA ELEMENTS BETWEEN THREADS OF A PARALLEL COMPUTER SYSTEM
PROCÉDÉ ET DISPOSITIF DE TRANSFERT D'ÉLÉMENTS DE DONNÉES ENTRE DES FILS D'UN SYSTÈME INFORMATIQUE PARALLÈLE

(30) Priorität: 08.04.2013 DE 102013206114
(43) Veröffentlichungstag der Anmeldung: 02.12.2015
(73) Patentinhaber: Siemens Aktiengesellschaft, 80333 München (DE)
(72) Erfinder: SCHÜLE, Tobias, 80636 München (DE)
(86) Internationale Anmeldenummer: PCT/EP2014/053182
(87) Internationale Veröffentlichungsnummer: WO 2014/166661

(56) Entgegenhaltungen:
- DE-A1-102012 211 670
- US-A1- 2003 135 535
- US-A1- 2004 252 709
- US-A1- 2013 081 060
- US-A1- 2013 081 061

## Beschreibung

Die Erfindung betrifft ein Verfahren und eine Vorrichtung zur Übertragung von Datenelementen von Erzeuger- zu Verbraucher-Threads innerhalb eines parallelen Rechnersystems, welches mehrere Prozessoren umfasst, die jeweils mindestens einen Prozessorkern enthalten.

In zahlreichen Anwendungen werden für die Kommunikation bzw. den Datenaustausch zwischen Komponenten eines Systems Warteschlangen eingesetzt. Warteschlangen erlauben es generell, Komponenten, die Daten erzeugen, von Komponenten, die Daten verarbeiten bzw. verbrauchen, zu entkoppeln und diese Komponenten parallel innerhalb des Systems zu betreiben. Typische Einsatzgebiete für Warteschlangen sind Client-Server-Systeme, Betriebssysteme, Netzwerkvermittlungsstellen, SCADA (Supervisory Control and Data Acquisition)-Systeme, Telekommunikationsanlagen, Bildverarbeitungsanwendungen sowie Systeme der Unterhaltungselektronik. Beispielsweise werden in sogenannten SCADA-Systemen die von Sensoren stammenden Daten bzw. Datenelemente gesammelt, gebündelt und anschließend über Warteschlangen den für die Auswertung, Überwachung und Visualisierung zuständigen Prozessen übermittelt.

Herkömmliche Warteschlangen weisen in der Regel eine FIFO-Semantik (First In, First Out) auf. Dies bedeutet, dass die zuerst in die Warteschlange eingereihten Datenelemente auch zuerst aus der Warteschlange wieder entnommen werden. Für den Zugriff auf Warteschlangen stehen zwei Grundoperationen zur Verfügung, nämlich eine push-Operation und eine tryPop-Operation. Mit der push-Operation werden Datenelemente in die Warteschlange eingereiht, während die tryPop-Operation ein Datenelement entnimmt, vorausgesetzt, dass die jeweilige Warteschlange nicht leer ist.

Ein Thread bezeichnet einen Ausführungsstrang oder eine Ausführungsreihenfolge bei der Abarbeitung eines Programms. Ein Thread bildet einen Teil eines sogenannten Prozesses. Einem Prozess sind ein Adressraum und weitere Betriebssystemmittel des jeweiligen Systems zugeordnet. Ein Prozess kann mehrere Threads oder auch nur einen einzigen Thread beinhalten. Verschiedene Threads können sich innerhalb eines Prozesses Prozessoren bzw. Prozessorkerne, einen Datenspeicher und andere betriebssystemabhängige Ressourcen, wie Dateien und Netzwerkverbindungen, teilen. Der Effizienzvorteil bei der Verwendung von Threads besteht darin, dass im Gegensatz zu Prozessen bei einem Thread-Wechsel kein vollständiger Wechsel des Prozesskontextes notwendig ist, da die Threads einen gemeinsamen Teil des Prozesskontextes verwenden. Die Ausführungsreihenfolge und der Wechsel zwischen Threads werden von einem Scheduler geregelt. Der Scheduler bildet eine Arbitrationslogik, die eine zeitliche Ausführung mehrerer Prozesse bzw. Threads in einem Betriebssystem steuert.
Wenn mehrere Threads auf eine Warteschlange zugreifen, ist es notwendig, die Konsistenz der Daten sicherzustellen. Dazu bedarf es eines Synchronisationsmechanismus, der garantiert, dass Änderungen an der Warteschlange ununterbrechbar ausgeführt werden. Bei parallelen Rechnersystemen, die mehrere Prozessoren bzw. Prozessorkernen enthalten, führt dies jedoch zu einem Flaschenhals bzw. Engpass, da die Zugriffe letztlich sequenziell erfolgen. Dies hat zur Folge, dass die Skalierbarkeit der Anwendungen stark eingeschränkt wird.

Weiterhin können die mit push- bzw. tryPop-Operationen einhergehenden Speicherzugriffe vor allem auf einem Non-Uniform Memory Access (NUMA)-System zu einem Engpass führen. Derartige Systeme verfügen über einen gemeinsamen Adressraum, weisen jedoch physikalisch getrennte Speicher auf. Da Zugriffe auf entfernte Speicherbereiche in der Regel wesentlich länger dauern als Zugriffe auf einen lokalen Speicher, ist besonders bei NUMA-Systemen eine hohe Datenlokalität für eine hohe Performance des Systems entscheidend.

Es bestehen zahlreiche Ansätze für die Implementierung von Warteschlangen, wie beispielsweise in M. Herlihy und N. Shavit "The Art of Multiprocessor Programming", Morgan Kaufmann, 2008, beschrieben. Zur Gewährleistung der Datenkonsistenz wird im einfachsten Fall bei jedem Zugriff die Warteschlange global gesperrt, beispielsweise mittels eines sogenannten Mutexes (Mutual Exclusion). Auf diese Weise wird sichergestellt, dass zu jedem Zeitpunkt immer nur ein Thread ein Datenelement in die Warteschlange einreihen oder aus der Warteschlange entnehmen kann. Ein Nachteil dieses herkömmlichen Ansatzes (Exklusive-Ansatz) ist die fehlende Skalierbarkeit, da alle Zugriffe sequenzialisiert werden.

Ein weiterer herkömmlicher Ansatz, der im Folgenden als Blocking-Ansatz bezeichnet wird, verwendet für das Einreihen und Entnehmen von Datenelementen getrennte Sperren. Dies bedeutet, dass gleichzeitig ein Datenelement eingereiht und ein anderes Datenelement aus der Warteschlange entnommen werden kann. Allerdings ist es nicht möglich, dass mehrere Erzeuger-Threads gleichzeitig jeweils ein Datenelement einreihen oder mehrere Verbraucher-Threads jeweils ein Datenelement entnehmen. Deshalb ist auch bei diesem herkömmlichen Ansatz die Skalierbarkeit stark eingeschränkt.

Weitere herkömmliche Ansätze versuchen, ohne derartige Sperren auszukommen, um den Synchronisationsaufwand zu minimieren. Diese Ansätze arbeiten ausschließlich mit sogenannten atomaren Operationen, d.h. ununterbrechbaren Operationen, und gehören somit zur Klasse der nichtblockierenden Algorithmen. Bei dem in M.M. Michael und M.L. Scott "Simple, fast and practical non-blocking and blocking concurrent queue algorithms", Symposium on Principles of Distributed Computing, Seiten 267 bis 275, 1996, angegebenen Verfahren (Non-Blocking-Ansatz) werden die Datenelemente in Form einer Liste verwaltet, wobei die Listenoperationen atomar durchgeführt werden. Auf diese Weise können mehrere Erzeuger- und Verbraucher-Threads quasi gleichzeitig auf eine Warteschlange zugreifen. Allerdings kann auch dieser herkömmliche Ansatz mit Hilfe atomarer Operationen anstelle von Sperren aufgrund der Cache-Kohärenz zu einem Engpass führen, insbesondere, wenn die beteiligten Threads auf nahe beieinander liegende Speicherbereiche zugreifen.

Verschiedene herkömmliche Varianten und Verfeinerungen der oben beschriebenen grundsätzlichen Ansätze haben gemeinsam, dass sie alle auf einer globalen Datenstruktur arbeiten, beispielsweise eine Liste oder ein Feld verwenden. Dies führt zwangsläufig zu einem Flaschenhals bzw. Engpass, da die Sicherstellung der Datenkonsistenz stets ein Mindestmaß an Synchronisation erfordert. Zudem ergibt sich insbesondere bei NUMA-Systemen das oben angesprochene Problem von Zugriffen auf entfernte Speicherbereiche.

Aus der US 2013/081061 A1 sind ein Verfahren, ein System und ein Medium zur Erleichterung der Kommunikation zwischen mehreren gleichzeitig ausgeführten Threads offenbart, die eine mehrbahnige, parallele Aufnahmetasche verwenden. Die Aufnahmetasche umfasst eine Vielzahl von unabhängig zugänglichen parallelen Bahnen, die jeweils konfiguriert sind, um Datenelemente zu speichern. Die Aufnahmetasche bietet zudem eine Einfügefunktion, die ausführbar ist, um ein gegebenes Datenelement in die Aufnahmetasche einzufügen, indem eine der Bahnen ausgewählt wird und die Datenelemente in die ausgewählten Bahnen eingefügt werden. Die Aufnahmetasche bietet weiterhin noch eine Verbrauchsfunktion, die ausführbar ist, um ein Datenelement aus der Aufnahmetasche zu verbrauchen, indem eine der Bahnen ausgewählt und ein Datenelement, das in der ausgewählten Bahn gespeichert ist, verbraucht (entfernt und zurückgesendet) wird. Die Aufnahmetasche garantiert, dass die Ausführung der Verbrauchsfunktion ein Datenelement zu verbrauchen, wenn die Aufnahmetasche nicht leer ist und es mehreren Threads erlaubt ist, die Einfüge- und Verbrauchsfunktionen parallel auszuführen.

Aus der US 2013/081060 A1 sind ein Verfahren, ein System und ein Medium zur Erleichterung der Kommunikation zwischen mehreren gleichzeitig ausgeführten Threads offenbart, die eine effiziente parallele Warteschlange verwenden. Die effiziente parallele Warteschlange bietet eine verwendbare Einfügefunktion von Produzenten-Threads, um Nachrichten gleichzeitig einzufügen. Weiterhin enthält die Warteschlange auch eine Verbrauchsfunktion, die von Verbraucher-Threads verwendet werden kann, um die Nachrichten gleichzeitig aus der Warteschlange zu lesen. Die Verbrauchsfunktion ist konfiguriert, um eine Bestellung pro Produzent zu garantieren, und zwar so, dass für jeden Produzent, Nachrichten, die dieser eingefügt hat, nur einmal und in der Reihenfolge gelesen werden, wie der Produzent diese Nachrichten eingefügt hat. In einer Ausführungsform kann die Verbrauchsfunktion die Lesenachricht automatisch aus der Warteschlange entfernen. In einer anderen Ausführungsform ist die Warteschlange konfiguriert, um die Nachrichten in einem Element-Array zu speichern. Die verschiedenen Zellen des Element-Array können gleichzeitig für Zugriffe von verschiedenen Threads zugänglich sein. Die Warteschlange kann jedoch die Parallelität durch Zuordnen einer entsprechenden Instanz eines Parallelitätssteuerungsmechanismus innerhalb jeder Zelle steuern, so dass höchstens ein Thread Zugriff auf eine bestimmte Zelle zu einem bestimmten Zeitpunkt haben kann.

Es ist daher eine Aufgabe der vorliegenden Erfindung, ein Verfahren und eine Vorrichtung zum Übertragen von Datenelementen zwischen Threads zu schaffen, bei denen Engpässe vermieden werden und die eine hohe Performance bieten.

Diese Aufgabe wird erfindungsgemäß durch ein Verfahren mit den in Patentanspruch 1 angegebenen Merkmalen gelöst.

Die Erfindung schafft demnach ein Verfahren zum Übertragen von Datenelementen von Erzeuger-Threads zu Verbraucher-Threads, die auf Prozessorkernen eines parallelen Rechnersystems ausgeführt werden, mittels mindestens einer globalen logischen Warteschlange, die für jeden Prozessorkern des parallelen Rechnersystems eine zugeordnete physikalische Warteschlange aufweist und die eine Datenelement-Verwaltungstabelle umfasst, die für jeden auf einem Prozessorkern ausgeführten Erzeuger-Thread einen Zählwert (Count), welcher die gesamte Anzahl der durch den jeweiligen Erzeuger-Thread in einer der physikalischen Warteschlangen der logischen Warteschlange eingereihten und dort befindlichen Datenelemente sowie einen Prozessorkern-Index (CORE) speichert, welcher denjenigen Prozessorkern angibt, in dessen physikalischer Warteschlange sich die dort von dem jeweiligen Erzeuger-Thread eingereihten Datenelemente befinden, wobei beim Entnehmen eines Datenelementes aus der logischen Warteschlange durch einen auf einem Prozessorkern ausgeführten Verbraucher-Thread dieser Verbraucher-Thread zunächst auf diejenige physikalische Warteschlange zugreift, die demjenigen Prozessorkern des parallelen Rechnersystems zugeordnet ist, auf dem der Verbraucher-Thread ausgeführt wird, und anschließend ein Datenelement aus dieser physikalischen Warteschlange ausliest, sofern sich dort ein Datenelement befindet, und ansonsten, sofern sich kein Datenelement in derjenigen physikalischen Warteschlange befindet, auf andere zufällig selektierte physikalische Warteschlangen anderer Prozessorkerne des parallelen Rechnersystems zugreift.

Bei dem erfindungsgemäßen Verfahren werden anstatt einer globalen Datenstruktur mehrere lokale, von außen nicht sichtbare Datenstrukturen verwendet. Dadurch wird ein Flaschenhals bzw. Engpass eliminiert und die Erzeuger-/Verbraucher-Threads können gleichzeitig Datenelemente einreihen bzw. entnehmen.

Bei einer möglichen Ausführungsform des erfindungsgemäßen Verfahrens wird beim Einreihen eines Datenelementes in die logische Warteschlange durch einen auf einem Prozessorkern ausgeführten Erzeuger-Thread ein Thread-Index des Erzeuger-Threads ermittelt und zusammen mit dem von dem Erzeuger-Thread stammenden Datenelement in diejenige physikalische Warteschlange desjenigen Prozessorkerns eingereiht, auf dem der Erzeuger-Thread ausgeführt wird, falls der in der Datenelement-Verwaltungstabelle der logischen Warteschlange gespeicherte Zählwert (Count) des ausgeführten Erzeuger-Threads null ist und angibt, dass sich noch kein von dem Erzeuger-Thread stammendes Datenelement in einer der anderen physikalischen Warteschlangen der logischen Warteschlange befindet.

Bei einer möglichen Ausführungsform des erfindungsgemäßen Verfahrens wird, falls der in der Datenelement-Verwaltungstabelle der logischen Warteschlange gespeicherte Zählwert (Count) des Erzeuger-Threads nicht null ist und angibt, dass sich bereits von dem Erzeuger-Thread stammende Datenelemente in einer der physikalischen Warteschlangen der logischen Warteschlange befinden, der ermittelte Thread-Index des Erzeuger-Threads zusammen mit dem von dem Erzeuger-Thread stammenden Datenelement in diejenige physikalische Warteschlange eingereiht, in welcher sich die von dem Erzeuger-Thread stammenden Datenelemente bereits befinden.

Bei einer weiteren möglichen Ausführungsform des erfindungsgemäßen Verfahrens gibt die logische Warteschlange eine Fehlermeldung (false) an den Verbraucher-Thread zurück, falls sich auch in den physikalischen Warteschlangen der anderen Prozessorkerne kein Datenelement befindet.

Bei einer weiteren möglichen Ausführungsform des erfindungsgemäßen Verfahrens werden die physikalischen Warteschlangen der logischen Warteschlange jeweils durch eine FIFO-Warteschlange gebildet, die mehrere sequenziell miteinander verknüpfte Speicherelemente umfasst.

Bei einer möglichen Ausführungsform des erfindungsgemäßen Verfahrens speichert ein Speicherelement einer physikalischen Warteschlange ein Datenelement und dessen zugehörigen Thread-Index, wobei dieser Thread-Index angibt, von welchem Erzeuger-Thread das Datenelement stammt.

Bei einer weiteren möglichen Ausführungsform des erfindungsgemäßen Verfahrens sind die physikalischen Warteschlangen aller Prozessorkerne eines Prozessors (P) in einem zu dem Prozessor zugehörigen Speicher (M) vorgesehen.

Bei einer weiteren möglichen Ausführungsform des erfindungsgemäßen Verfahrens wird die Anzahl der auf Prozessorkernen des parallelen Rechnersystems ausgeführten Threads überwacht und das Verfahren zum Übertragen von Datenelementen von Erzeuger-Threads zu Verbraucher-Threads dann ausgeführt, wenn die überwachte Anzahl der Threads innerhalb des parallelen Rechnersystems einen einstellbaren Schwellenwert überschreitet.

Die Erfindung schafft ferner ein Rechnersystem mit den in Patentanspruch 11 angegebenen Merkmalen.

Die Erfindung schafft demnach ein Rechnersystem mit mehreren Prozessoren, welche jeweils mehrere Prozessorkerne aufweisen, wobei für jeden Prozessor ein Speicher vorgesehen ist,
in dem für jeden Prozessorkern des jeweiligen Prozessors eine zugehörige physikalische Warteschlange gespeichert ist, die mehrere sequenziell verknüpfte Speicherelemente umfasst, wobei
jedes Speicherelement jeweils ein zwischen zwei auf Prozessorkernen ausgeführten Threads übertragenes Datenelement und einen zugehörigen Thread-Index speichert, welcher einen Erzeuger-Thread angibt, von dem das übertragene Datenelement stammt,
die physikalischen Warteschlangen aller Prozessorkerne zusammen eine globale logische Warteschlange des parallelen Rechnersystems bilden, die eine Datenelement-Verwaltungstabelle aufweist, in der für jeden auf einem Prozessorkern ausgeführten Erzeuger-Thread ein Zählwert (Count), welcher die gesamte Anzahl der durch den jeweiligen Erzeuger-Thread in einer der physikalischen Warteschlangen der logischen Warteschlange eingereihten und dort befindlichen Datenelemente angibt, und ein Prozessorkern-Index (CORE) gespeichert ist, welcher denjenigen Prozessorkern angibt, in dessen physikalischer Warteschlange sich die dort von dem jeweiligen Erzeuger-Thread eingereihten Datenelemente befinden und
wobei beim Entnehmen eines Datenelementes aus der logischen Warteschlange durch einen auf einem Prozessorkern ausgeführten Verbraucher-Thread dieser Verbraucher-Thread zunächst auf diejenige physikalische Warteschlange zugreift, die demjenigen Prozessorkern des parallelen Rechnersystems zugeordnet ist, auf dem der Verbraucher-Thread ausgeführt wird, und anschließend ein Datenelement aus dieser physikalischen Warteschlange ausliest, sofern sich dort ein Datenelement befindet und ansonsten, sofern sich kein Datenelement in derjenigen physikalischen Warteschlange befindet, auf andere zufällig selektierte physikalische Warteschlangen anderer Prozessorkerne des parallelen Rechnersystems zugreift.

Bei einer möglichen Ausführungsform des erfindungsgemäßen Rechnersystems sind die Prozessoren und deren Speicher über ein Verbindungsnetzwerk des Rechnersystems miteinander verbunden, über das Datenelemente zwischen den Prozessoren mittels der globalen logischen Warteschlange übertragen werden.

Bei einer weiteren möglichen Ausführungsform des erfindungsgemäßen Rechnersystems besitzt jeder Prozessorkern eines Prozessors einen Level-1-Cache-Speicher, der an einen Level-2-Cache-Speicher des Prozessors gekoppelt ist.

Bei einer weiteren möglichen Ausführungsform des erfindungsgemäßen Rechnersystems ist der Level-2-Cache-Speicher des Prozessors an das Verbindungsnetzwerk des parallelen Rechnersystems angeschlossen.

Bei einer möglichen Ausführungsform des erfindungsgemäßen Rechnersystems handelt es sich bei dem Rechnersystem um ein NUMA (Non-Uniform Memory Access)-System.

Im Weiteren werden mögliche Ausführungsformen des erfindungsgemäßen Verfahrens und der erfindungsgemäßen Vorrichtung zur Übertragung von Datenelementen zwischen Threads unter Bezugnahme auf die beigefügten Figuren näher erläutert.

Es zeigen:
- Fig. 1: ein schematisches Diagramm zur Erläuterung der grundlegenden Funktionsweise des erfindungsgemäßen Verfahrens zur Übertragung von Datenelementen;
- Fig. 2: ein Blockschaltbild zur Darstellung eines Ausführungsbeispiels eines erfindungsgemäßen parallelen Rechnersystems, bei dem das erfindungsgemäße Verfahren zur Übertragung von Datenelementen angewendet werden kann;
- Fig. 3: ein Ablaufdiagramm zur Erläuterung des Einreihens eines Datenelementes in eine Warteschlange mit dem erfindungsgemäßen Verfahren;
- Fig. 4: ein Ablaufdiagramm zur Darstellung des Entnehmens eines Datenelementes aus einer Warteschlange gemäß dem erfindungsgemäßen Verfahren;
- Fig. 5: ein Diagramm zur Darstellung des erzielbaren Durchsatzes mithilfe des erfindungsgemäßen Verfahrens im Vergleich zu Verfahren, die herkömmliche Warteschlangen einsetzen.

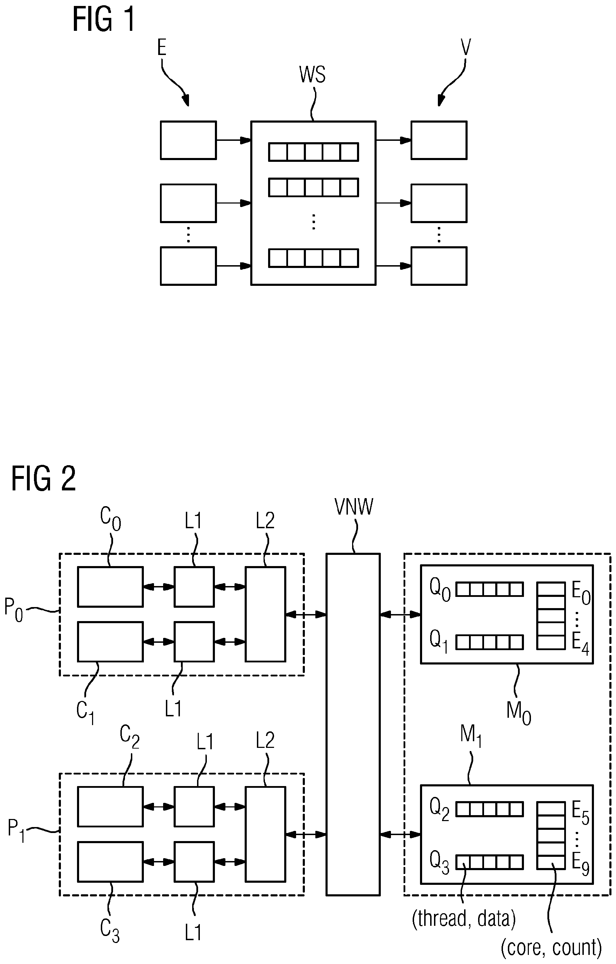

Bei dem erfindungsgemäßen Verfahren und der erfindungsgemäßen Vorrichtung werden Datenelemente von Erzeuger-Threads E zu Verbraucher-Threads V innerhalb eines parallelen Rechnersystems übertragen, wobei eine globale logische Warteschlange WS verwendet wird. Das in Fig. 1 dargestellte schematische Diagramm illustriert eine dem erfindungsgemäßen Verfahren und Vorrichtung zugrunde liegende Idee, welche darin besteht, anstatt einer globalen Datenstruktur mehrere lokale von außen nicht sichtbare Datenstrukturen bzw. physikalische Warteschlangen zu verwenden. Die physikalischen bzw. physikalisch implementierten Warteschlangen bilden zusammen die logische Warteschlange WS des parallelen Rechnersystems. Die logische Warteschlange WS kann auf einem oder mehreren Hauptspeichern M implementiert werden. Die logische Warteschlange WS nimmt Datenelemente von Erzeuger-Threads E entgegen und überträgt diese zu Verbraucher-Threads V. Die Erzeuger-Threads E und Verbraucher-Threads V werden auf Prozessorkernen Cᵢ des parallelen Rechnersystems ausgeführt. Durch die Verwendung der logischen Warteschlange WS wird ein Engpass des parallelen Rechnersystems beseitigt, da die Erzeuger-Threads E und Verbraucher-Threads V gleichzeitig Datenelemente in die logische Warteschlange WS einreihen bzw. entnehmen können. Die auf diese Weise implementierte logische Warteschlange WS behält die FIFO-Semantik dabei bei. Dies bedeutet, dass die Reihenfolge von Datenelementen, die von einem Erzeuger-Thread E eingereiht und von einem anderen Thread entnommen werden, erhalten bleibt. Hierzu wird in der logischen Warteschlange WS Buch darüber geführt, welcher Thread Daten in welche lokale physikalische Warteschlange Q eingereiht hat. Dies kann bei einer möglichen Implementierung mithilfe einer Datenelement-Verwaltungstabelle geschehen.

Fig. 2 zeigt ein Blockschaltbild zur Darstellung eines parallelen Rechnersystems, auf dem das erfindungsgemäße Verfahren zum Übertragen von Datenelementen von Erzeuger-Threads E zu Verbraucher-Threads V ausgeführt werden kann. Bei dem in Fig. 2 dargestellten parallelen Rechnersystem kann es sich beispielsweise um ein NUMA (Non-Uniform Memory Access)-System handeln. Ein derartiges NUMA-System verfügt über einen gemeinsamen Adressraum, hat jedoch physikalisch getrennte Speicher M, wie in Fig. 2 angedeutet. Das parallele Rechnersystem weist mehrere Prozessoren P auf, die jeweils mehrere Prozessorkerne C enthalten. Bei dem in Fig. 2 dargestellten Beispiel weist das parallele Rechnersystem zwei Prozessoren P0, P1 auf, die jeweils zwei Prozessorkerne enthalten. Die ersten beiden Prozessorkerne C0, C1 befinden sich in einem ersten Prozessor P0, während sich die weiteren Prozessorkerne C2, C3 in einem anderen Prozessor P1 befinden. Bei dem in Fig. 2 dargestellten Ausführungsbeispiel verfügt das Rechnersystem zudem über zwei Speichereinheiten M0, M1. Dabei ist die erste Speichereinheit M0 dem ersten Prozessor P0 zugeordnet und die zweite Speichereinheit M1 dem zweiten Prozessor P1. Der Prozessor P0 verfügt über die beiden ersten Prozessorkerne C0, C1 und der zweite Prozessor P1 verfügt über die Prozessorkerne C2, C3. Für jeden Prozessor P des Rechnersystems ist somit ein Speicher bzw. eine Speichereinheit M vorgesehen, in dem für jeden Prozessorkern C des jeweiligen Prozessors P eine zugehörige physikalische lokale Warteschlange Q gespeichert ist. In dem in Fig. 2 dargestellten einfachen parallelen Rechnersystem ist in dem Speicher M0 des ersten Prozessors P0 eine erste physikalische Warteschlange Q0 für den ersten Prozessorkern C0 des ersten Prozessors P0 und eine zweite physikalische Warteschlange Q1 für den zweiten Prozessorkern C1 des ersten Prozessors P0 gespeichert. In gleicher Weise verfügt der zweite Speicher M1 für den zweiten Prozessor P1 für jeden der beiden darin enthaltenen Prozessorkerne C2, C3 über jeweils eine zugehörige physikalische lokale Warteschlange Q2, Q3, wie in Fig. 2 dargestellt. Die physikalischen Warteschlangen Qᵢ umfassen jeweils sequenziell verknüpfte adressierbare Speicherelemente. In einer möglichen Ausführungsform sind die Speicherelemente sequenziell verschaltet. Bei einer bevorzugten Ausführungsform sind die Speicherelemente sequenziell logisch verkettet, beispielsweise mithilfe von Zeigern oder dergleichen. Jedes Speicherelement einer physikalischen Warteschlange Q speichert jeweils ein Datenelement, das zwischen zwei Threads übertragen wird, die auf verschiedenen Prozessorkernen ausgeführt werden können, sowie einen zugehörigen Thread-Index. Dieser Thread-Index gibt einen Erzeuger-Thread E an, von dem das übertragene Datenelement stammt. Die physikalischen Warteschlangen Q aller Prozessorkerne C des parallelen Rechnersystems bilden zusammen eine globale logische Warteschlange WS des parallelen Rechnersystems. Bei dem in Fig. 2 dargestellten einfachen Ausführungsbeispiel eines parallelen Rechnersystems bilden die physikalischen Warteschlangen Q0, Q1, Q2, Q3 die globale logische Warteschlange WS des gesamten parallelen Rechnersystems. Diese logische Warteschlange WS weist eine Datenelement-Verwaltungstabelle auf, wie in Fig. 2 angedeutet. In dieser Datenelement-Verwaltungstabelle wird für jeden auf einem Prozessorkern C ausgeführten Erzeuger-Thread E ein Zählwert (Count) gespeichert, welcher die gesamte Anzahl der durch den jeweiligen Erzeuger-Thread in einer der physikalischen Warteschlangen Q der einen logischen Warteschlange WS eingereihten und dort befindlichen Datenelemente angibt. Darüber hinaus wird in der Datenelement-Verwaltungstabelle für jeden auf einem Prozessorkern C ausgeführten Erzeuger-Thread E ein Prozessorkern-Index (Core) gespeichert, welcher denjenigen Prozessorkern C angibt, in dessen physikalischer lokalen Warteschlange Q sich die dort von dem jeweiligen Erzeuger-Thread E eingereihten Datenelemente befinden.

Bei dem in Fig. 2 dargestellten, einfachen Ausführungsbeispiel verfügt die Datenelement-Verwaltungstabelle über zehn Einträge (E0 bis E9) für zehn verschiedene Threads des parallelen Rechnersystems. Wie in Fig. 2 dargestellt, kann die Datenelement-Verwaltungstabelle auf verschiedenen Speichern des parallelen Rechnersystems, d.h. auf den Speichern M0 und M1, implementiert sein oder über verschiedene Speichereinheiten Mᵢ verteilt gespeichert werden. Die Anzahl der Einträge bzw. Verwaltungs-Threads kann sich dynamisch ändern.

Wie in Fig. 2 dargestellt, sind die Prozessoren P und deren Speicher M über ein Verbindungsnetzwerk VNW des Rechnersystems miteinander verbunden. Über das Verbindungsnetzwerk VNW werden Datenelemente zwischen den Prozessoren P mittels der globalen logischen Warteschlange WS übertragen. Bei dem Verbindungsnetzwerk VNW kann es sich beispielsweise um einen Bus, einen Datenring oder auch um Kreuz-Schienenverteiler oder dergleichen handeln. An dem Verbindungsnetzwerk VNW sind die verschiedenen Prozessoren P angeschlossen, die jeweils mehrere Prozessorkerne C umfassen. Wie in Fig. 2 dargestellt, können die Prozessoren P beispielsweise jeweils zwei Prozessorkerne C enthalten. Jeder Prozessorkern C eines Prozessors P besitzt dabei, wie in Fig. 2 dargestellt, einen Level-1-Cache-Speicher L1, der an einen Level-2-Cache-Speicher L2 des Prozessors P gekoppelt ist. Der Level-2-Cache-Speicher L2 des Prozessors ist seinerseits an das Verbindungsnetzwerk VNW des parallelen Rechnersystems angeschlossen. Bei dem in Fig. 2 dargestellten Rechnersystem kann es sich beispielsweise um ein NUMA-System handeln. Bei dem in Fig. 2 dargestellten Ausführungsbeispiel verfügt das NUMA-System über zwei Prozessoren P, die jeweils zwei Prozessorkerne C0, C1 bzw. C2, C3 enthalten. Alle Prozessorkerne C besitzen einen eigenen Level-1-Cache-Speicher L1 und sind über ihren Level-2-Cache-Speicher L2 gekoppelt. Die Speicheranbindung an die Speichereinheiten M0, M1 erfolgt über das Verbindungsnetzwerk VNW. Für jeden Prozessorkern Cᵢ ist genau eine ihm zugeordnete physikalische Warteschlange Qᵢ vorgesehen, die sich in einem Speicher M des entsprechenden Prozessors P befindet. Um eine hohe Datenlokalität zu erreichen, wird der Speicherbereich für eine Warteschlange Qⱼ bei der Allokation an den physikalischen Speicher gebunden. Neben den eigentlichen Daten des Datenelementes wird zusätzlich der zugehörige Thread-Index gespeichert, der denjenigen Erzeuger-Thread E angibt, welcher das Datenelement eingereiht hat. Ein gespeichertes Element umfasst somit ein Datenpaar, nämlich den Thread-Index und die Nutzdaten des Datenelementes (Thread, Data). Die Datenelement-Verwaltungstabelle der logischen Warteschlange WS speichert für jeden Thread Eᵢ, wie viele der von ihm eingereihten Datenelemente sich noch im parallelen Rechnersystem befinden und in welcher Warteschlange (Prozessorkern-Index CORE) diese Datenelemente liegen. Diese Informationen werden verwendet, um die FIFO-Semantik sicherzustellen. Ein Tabelleneintrag in der Datenverwaltungstabelle umfasst somit ebenfalls ein Paar, nämlich einen Zählwert (Count) und einen Prozessorkern-Index (Core). Der Zählwert (Count) des Paares gibt die gesamte Anzahl der durch den jeweiligen Erzeuger-Thread E in einer der physikalischen Warteschlangen der logischen Warteschlange WS eingereihten und dort befindlichen Datenelemente an. Der Prozessorkern-Index (Core) gibt denjenigen Prozessorkern C an, in dessen physikalischer Warteschlange Q sich die dort von dem jeweiligen Erzeuger-Thread E eingereihten Datenelemente befinden.

Wie man aus Fig. 2 erkennen kann, verfügt jeder Prozessorkern C über eine eigene physikalische lokale Warteschlange Q, die fest an den Speicher M des jeweiligen Prozessors P gebunden ist. Jedes Datenelement enthält neben den Nutzdaten den Index des Threads, der das Datenelement eingereiht hat. Für jeden Erzeuger-Thread E gibt es einen Eintrag in der Datenverwaltungstabelle der logischen Warteschlange WS, aus dem hervorgeht, wie viele Datenelemente dieses Erzeuger-Threads E sich im System noch befinden und in welcher lokalen Warteschlange Q sie liegen.

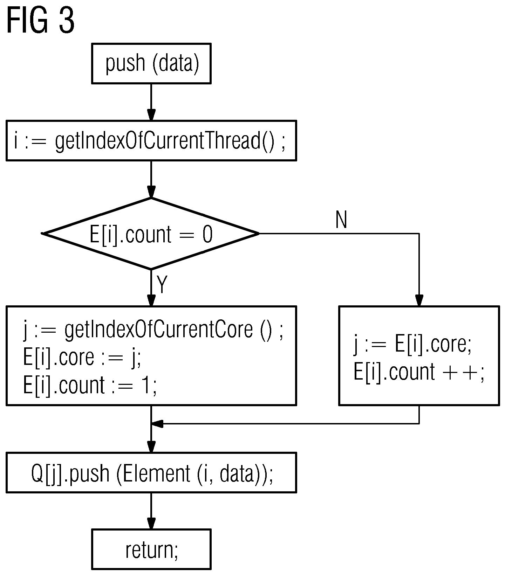

Die logische Warteschlange WS des parallelen Rechnersystems erlaubt verschiedene Operationen, insbesondere das Einfügen eines Datenelementes (push) sowie das Entnehmen eines Datenelementes (tryPop). Das Einreihen eines Datenelementes (push) ist als Ablaufdiagramm in Fig. 3 dargestellt. Zunächst wird beim Einreihen eines Datenelementes in die logische Warteschlange WS des parallelen Rechnersystems der Index des aufrufenden Threads ermittelt (get index of current thread). Befinden sich keine Daten des aufrufenden Threads in einer der Warteschlangen (E[i].count = 0), wird das Datenelement in diejenige Warteschlange Q desjenigen Prozessorkerns C eingereiht, der den Thread ausführt. In diesem Fall ist also kein Zugriff auf einen entfernten Speicherbereich erforderlich. Anderenfalls wird das Datenelement in diejenige Warteschlange Q eingereiht, in der sich bereits Datenelemente des aufrufenden Threads befinden. Sofern der Thread zwischenzeitlich nicht auf einen anderen Prozessorkern C verschoben wurde, handelt es sich dabei ebenfalls um die lokale Warteschlange.

Wie man aus Fig. 3 erkennen kann, wird beim Einreihen (push) eines Datenelementes in die logische Warteschlange durch einen auf einem Prozessorkern C ausgeführten Erzeuger-Thread zunächst ein Thread-Index des Erzeuger-Threads E ermittelt und zusammen mit dem von dem Erzeuger-Thread stammenden Datenelement in die physikalische Warteschlange Q desjenigen Prozessorkerns C eingereiht, auf dem der Erzeuger-Thread ausgeführt wird, falls der in der Datenelement-Verwaltungstabelle der logischen Warteschlange gespeicherte Zählwert (Count) des ausgeführten Erzeuger-Threads null ist und angibt, dass sich noch kein von dem Erzeuger-Thread stammendes Datenelement in einer physikalischen Warteschlange Q der logischen Warteschlange WS befindet. Falls umgekehrt der in der Datenelement-Verwaltungstabelle der logischen Warteschlange WS gespeicherte Zählwert (Count) des Erzeuger-Threads E nicht null ist und angibt, dass sich bereits von dem Erzeuger-Thread E stammende Datenelemente in einer der physikalischen Warteschlangen Q der logischen Warteschlange WS befinden, wird der Thread-Index des Erzeuger-Threads zusammen mit dem von dem Erzeuger-Thread stammenden Datenelement in diejenige physikalische Warteschlange Q eingereiht, in welcher sich die von dem Erzeuger-Thread E stammenden Datenelemente bereits befinden.

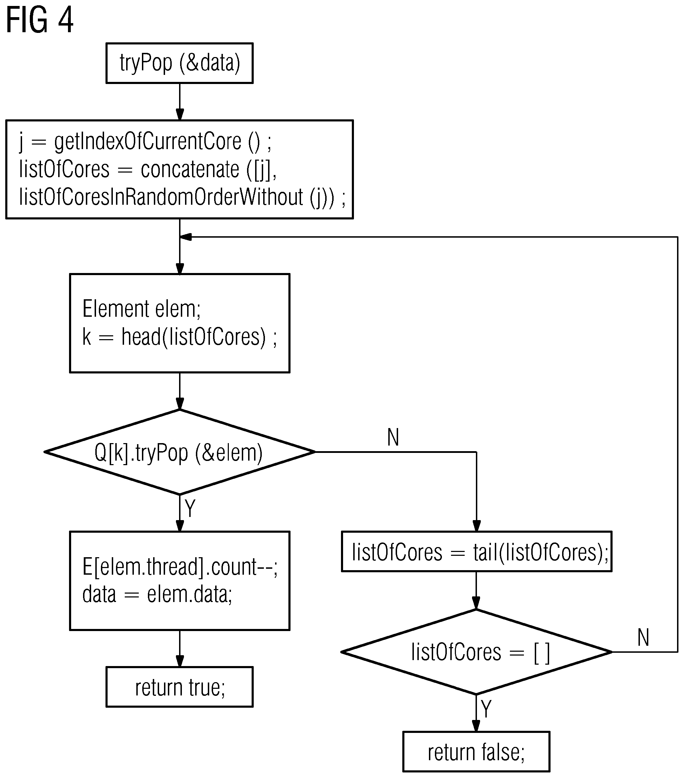

Die in dem Rechnersystem verwendete logische Warteschlange WS erlaubt es auch, Datenelemente aus ihr zu entnehmen. Der Ablauf beim Entnehmen eines Datenelementes aus der logischen Warteschlange ist in dem in Fig. 4 dargestellten Ablaufdiagramm dargestellt. Beim Entnehmen (tryPop) eines Datenelementes aus der logischen Warteschlange WS durch einen auf einem Prozessorkern C ausgeführten Verbraucher-Thread V greift dieser Verbraucher-Thread V zunächst auf diejenige physikalische Warteschlange Q zu, die demjenigen Prozessorkern C des parallelen Rechnersystems zugeordnet ist, auf dem der Verbraucher-Thread V ausgeführt wird, und liest anschließend ein Datenelement aus dieser physikalischen Warteschlange Q aus, sofern sich dort ein Datenelement befindet. Beim Entnehmen eines Datenelementes aus der logischen Warteschlange WS durch einen Verbraucher-Thread V greift dieser Verbraucher-Thread auf andere zufällig selektierte physikalische Warteschlangen Q anderer Prozessorkerne C des parallelen Rechnersystems zu, sofern sich kein Datenelement in derjenigen physikalischen Warteschlange Q befindet, die demjenigen Prozessorkern C zugeordnet ist, auf dem der Verbraucher-Thread V ausgeführt wird. Wie in Fig. 4 dargestellt, gibt die logische Warteschlange eine Fehlermeldung (false) an den Verbraucher-Thread V zurück, falls sich auch in den physikalischen Warteschlangen Q der anderen Prozessorkerne C kein zugehöriges Datenelement befindet. Wie man aus Fig. 4 erkennen kann, versucht der entnehmende Verbraucher-Thread zunächst, ein Datenelement aus der Warteschlange Q desjenigen Prozessorkerns C zu entnehmen, der den Verbraucher-Thread V ausführt. Ist die Warteschlange Q nicht leer, entstehen auch hier wieder keine Zugriffe auf entfernte Speicherbereiche (Rückgabewert = true). Anderenfalls versucht der Verbraucher-Thread V, ein Datenelement aus einer anderen, zufällig ausgewählten Warteschlange Q zu entnehmen. Dieser Vorgang wird so lange wiederholt, bis ein Datenelement gefunden wurde oder alle logischen physikalischen Warteschlangen Q innerhalb der logischen Warteschlange WS abgefragt sind. Im letzteren Fall wird dann die Fehlermeldung (false) zurückgegeben.

Die in Fig. 3 dargestellte push-Operation stellt sicher, dass sich die im System befindlichen Datenelemente eines Threads in ein und derselben Warteschlange Q befinden, vorzugsweise in der lokalen Warteschlange.

Die in Fig. 4 dargestellte tryPop-Operation entnimmt vorzugsweise der lokalen Warteschlange Q Datenelemente. Nur wenn diese leer ist, wird auf andere Warteschlangen zugegriffen.

Bei den Datenelementen, die in dem erfindungsgemäßen Rechnersystem zwischen Erzeuger- und Verbraucher-Threads übertragen werden können, kann es sich um beliebige Datenelemente handeln, beispielsweise einzelne Bits, Bytes, Datenwörter, Frames, aber auch um komplexere Datenstrukturen, beispielsweise Vektoren, Bilder oder dergleichen. Die Datenelemente können auch nutzerdefinierte Datenstrukturen umfassen.

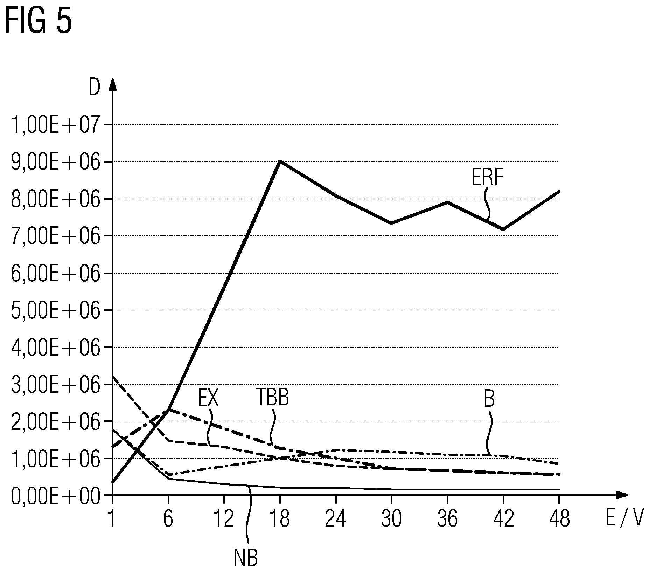

Fig. 5 zeigt ein Diagramm zur Darstellung des Durchsatzes bzw. der Performance eines erfindungsgemäßen Rechnersystems, welches eine logische Warteschlange WS beinhaltet, und von herkömmlichen Rechnersystemen. Der Durchsatz gibt die Anzahl der übertragenen Datenelemente pro Zeit an. Die y-Achse zeigt den Durchsatz in Datenelementen pro Sekunde gegenüber der Anzahl von Threads, welche Erzeuger-Threads E und Verbraucher-Threads V umfassen. Bei dem dargestellten Diagramm liegt die Anzahl der Threads E/V zwischen 1 und 48. Wie man aus Fig. 5 erkennen kann, nimmt der Durchsatz D bzw. die Performance bei einem parallelen Rechnersystem, das eine logische Warteschlange WS verwendet, die bei dem erfindungsgemäßen Verfahren zum Übertragen von Datenelementen eingesetzt wird, zunächst stark zu, wobei bereits ab einer Anzahl von sechs Threads die Performance bzw. der Durchsatz D den Durchsatz herkömmlicher Systeme übertrifft. Bei einer Anzahl von 18 Threads übertrifft der Durchsatz bzw. die Performance des erfindungsgemäßen Rechnersystems die Performance herkömmlicher Systeme um etwa einen Faktor 9. Bei einer sehr geringen Anzahl von Threads ist die Performance bzw. der Durchsatz D geringer als bei anderen Systemen bzw. Verfahren. In herkömmlichen Steuerungsanlagen oder bei Server, die Videodaten streamen, liegt die Anzahl der Threads üblicherweise weit höher, beispielsweise bei 20 bis 30 Threads innerhalb des parallelen Rechnersystems. Bei derartigen Anlagen, bei der eine Vielzahl von Threads gleichzeitig ausgeführt werden, ist somit das erfindungsgemäße Verfahren und System herkömmlichen Systemen deutlich überlegen, wie man aus Fig. 5 erkennen kann.

Bei einer möglichen Ausführungsform des erfindungsgemäßen Verfahrens wird die Anzahl der auf dem Prozessorkern C des parallelen Rechnersystems ausgeführten Threads überwacht und man wechselt auf das Verfahren zum Übertragen von Datenelementen von Erzeuger-Threads E zu Verbraucher-Threads V, wenn die überwachte Anzahl der Threads einen einstellbaren Schwellenwert überschreitet. Beispielsweise kann der Schwellenwert auf zehn Threads pro Rechnersystem eingestellt werden. Die in den Figuren 3, 4 dargestellten Zugriffsoperationen auf die logische Warteschlange WS können bei einer möglichen Ausführungsform als Routine in einer Bibliothek abgelegt sein.

Ein Vorteil des erfindungsgemäßen Verfahrens besteht darin, dass es zu einer höheren Skalierbarkeit führt, da Zugriffe auf die einzelnen Warteschlangen überwiegend lokal erfolgen. Somit können mehrere Erzeuger- und Verbraucher-Threads gleichzeitig Datenelemente produzieren bzw. konsumieren, ohne sich gegenseitig zu stören. Dies führt zu einer Steigerung des Durchsatzes D, wie in Fig. 5 dargestellt. Fig. 5 zeigt den Durchsatz verschiedener Warteschlangen in Abhängigkeit der Anzahl der Threads. Die als Exclusive (EX), Blocking (B) und Non-Blocking (NB) bezeichneten Verfahren sind zum Vergleich ebenfalls dargestellt. TBB (Threading Building Blocks) ist demgegenüber eine C++-Bibliothek von Intel, die optimierte, nichtblockierende Implementierungen von Warteschlangen enthält. Die Kurve ERF zeigt den Durchsatz D des erfindungsgemäßen Verfahrens. Wie man aus Fig. 5 erkennen kann, liefert das erfindungsgemäße Verfahren ab einer Anzahl von etwa sechs Erzeuger- und Verbraucher-Threads, die auf verschiedenen Prozessorkernen C laufen, einen wesentlich höheren Durchsatz D als herkömmliche Verfahren.

Das erfindungsgemäße Verfahren zum Übertragen von Datenelementen von Erzeuger-Threads E zu Verbraucher-Threads V kann mithilfe eines Scheduling-Mechanismus in einem Mehrprozessorsystem eingesetzt werden. Die bei dem erfindungsgemäßen Verfahren eingesetzte logische Warteschlange WS kann für verschiedene Anwendungen eingesetzt werden, um Daten erzeugende Threads E von Daten verbrauchenden Threads V zu entkoppeln und diese parallel zu betreiben. Beispielsweise eignet sich die logische Warteschlange WS für ein Client-Server-System, ein Betriebssystem, eine Netzwerkvermittlungsstelle, ein SCADA-System, eine Telekommunikationsanlage, eine Bildverarbeitungsanlage sowie für Systeme der Unterhaltungselektronik.

## Patentansprüche

1. Verfahren zum Übertragen von Datenelementen von Erzeuger-Threads (E) zu Verbraucher-Threads (V),
die auf Prozessorkernen (Cᵢ) eines parallelen Rechnersystems ausgeführt werden, mittels mindestens einer globalen logischen Warteschlange (WS), die für jeden Prozessorkern (Cᵢ) des parallelen Rechnersystems eine zugeordnete physikalische Warteschlange (Qᵢ) aufweist und die eine Datenelement-Verwaltungstabelle umfasst, die für jeden auf einem Prozessorkern (Cᵢ) ausgeführten Erzeuger-Thread (E) einen Zählwert (Count), welcher die gesamte Anzahl der durch den jeweiligen Erzeuger-Thread (E) in einer der physikalischen Warteschlangen der logischen Warteschlange (WS) eingereihten und dort befindlichen Datenelemente sowie einen Prozessorkern-Index (CORE) speichert, welcher denjenigen Prozessorkern (Cᵢ) angibt, in dessen physikalischer Warteschlange sich die dort von dem jeweiligen Erzeuger-Thread (E) eingereihten Datenelemente befinden, wobei beim Entnehmen (tryPop) eines Datenelementes aus der logischen Warteschlange (WS) durch einen auf einem Prozessorkern (Cᵢ) ausgeführten Verbraucher-Thread (V) dieser Verbraucher-Thread (V) zunächst auf diejenige physikalische Warteschlange (Q) zugreift, die demjenigen Prozessorkern (Cᵢ) des parallelen Rechnersystems zugeordnet ist, auf dem der Verbraucher-Thread (V) ausgeführt wird, und anschließend ein Datenelement aus dieser physikalischen Warteschlange (Q) ausliest, sofern sich dort ein Datenelement befindet und ansonsten, sofern sich kein Datenelement in derjenigen physikalischen Warteschlange (Q) befindet, auf andere zufällig selektierte physikalische Warteschlangen (Q) anderer Prozessorkerne des parallelen Rechnersystems zugreift.

2. Verfahren nach Anspruch 1,
wobei beim Einreihen (push) eines Datenelementes in die logische Warteschlange (WS) durch einen auf einem Prozessorkern (Cᵢ) ausgeführten Erzeuger-Thread (E) ein Thread-Index des Erzeuger-Threads ermittelt und zusammen mit dem von dem Erzeuger-Thread stammenden Datenelement in die physikalische Warteschlange desjenigen Prozessorkerns (Cᵢ) eingereiht wird, auf dem der Erzeuger-Thread (E) ausgeführt wird, falls der in der Datenelement-Verwaltungstabelle der logischen Warteschlange (WS) gespeicherte Zählwert (Count) des ausgeführten Erzeuger-Threads (E) null ist und angibt, dass sich noch kein von dem Erzeuger-Thread (E) stammendes Datenelement in einer der physikalischen Warteschlangen der logischen Warteschlange (WS) befindet.

3. Verfahren nach Anspruch 1 oder 2,
wobei, falls der in der Datenelement-Verwaltungstabelle der logischen Warteschlange gespeicherte Zählwert (Count) des Erzeuger-Threads (E) nicht null ist und angibt, dass sich bereits von dem Erzeuger-Thread (E) stammende Datenelemente in einer der physikalischen Warteschlangen der logischen Warteschlange (WS) befinden, der ermittelte Thread-Index des Erzeuger-Threads (E) zusammen mit dem von dem Erzeuger-Thread (E) stammenden Datenelement in diejenige physikalische Warteschlange (Q) eingereiht wird, in welcher sich die von dem Erzeuger-Thread (E) stammenden Datenelemente bereits befinden.

4. Verfahren nach Anspruch 1,
wobei die logische Warteschlange (WS) eine Fehlermeldung (false) an den Verbraucher-Thread (V) zurückgibt, falls sich auch in den physikalischen Warteschlangen (Q) der anderen Prozessorkerne (C) kein Datenelement befindet.

5. Verfahren nach einem der vorangehenden Ansprüche 1 bis 4, wobei die physikalischen Warteschlangen (Q) der logischen Warteschlange (WS) jeweils durch eine FIFO-Warteschlange gebildet werden, die mehrere sequenziell miteinander verknüpfte Speicherelemente umfasst.

6. Verfahren nach Anspruch 5,
wobei ein Speicherelement einer physikalischen Warteschlange (Q) ein Datenelement und dessen zugehörigen Thread-Index speichert, welcher angibt, von welchem Erzeuger-Thread (E) das Datenelement stammt.

7. Verfahren nach einem der vorangehenden Ansprüche 1 bis 6, wobei die physikalischen Warteschlangen (Q) aller Prozessorkerne (C) eines Prozessors (P) in einem zu dem Prozessor (P) zugehörigen Speicher (M) vorgesehen sind.

8. Verfahren nach einem der vorangehenden Ansprüche 1 bis 7, wobei die Anzahl der auf den Prozessorkernen (Cᵢ) des parallelen Rechnersystems ausgeführten Threads überwacht wird und das Verfahren zum Übertragen von Datenelementen von Erzeuger-Threads (E) zu Verbraucher-Threads (V) ausgeführt wird, wenn die überwachte Anzahl der Threads einen einstellbaren Schwellenwert überschreitet.

9. Rechnersystem mit mehreren Prozessoren (P), welche jeweils mehrere Prozessorkerne (Cᵢ) aufweisen, wobei
- für jeden Prozessor (P)
--ein Speicher (M) vorgesehen ist, in dem für jeden Prozessorkern (Cᵢ) des jeweiligen Prozessors (P) eine zugehörige physikalische Warteschlange (Qᵢ) gespeichert ist, die mehrere sequenziell verknüpfte Speicherelemente umfasst, wobei
jedes Speicherelement jeweils ein zwischen zwei auf Prozessorkernen (Cᵢ) ausgeführten Threads übertragenes Datenelement und einen zugehörigen Thread-Index speichert, welcher einen Erzeuger-Thread (E) angibt, von dem das übertragene Datenelement stammt,
die physikalischen Warteschlangen (Q) aller Prozessorkerne (Cᵢ) zusammen eine globale logische Warteschlange (WS) des parallelen Rechnersystems bilden, die eine Datenelement-Verwaltungstabelle aufweist, in der für jeden auf einem Prozessorkern (Cᵢ) ausgeführten Erzeuger-Thread (E) ein Zählwert (Count), welcher die gesamte Anzahl der durch den jeweiligen Erzeuger-Thread (E) in einer der physikalischen Warteschlangen (Q) der logischen Warteschlange (WS) eingereihten und dort befindlichen Datenelemente angibt, und
-- ein Prozessorkern-Index (CORE) gespeichert ist, welcher denjenigen Prozessorkern (Cᵢ) angibt, in dessen physikalischer Warteschlange (Q) sich die dort von dem jeweiligen Erzeuger-Thread (E) eingereihten Datenelemente befinden, und
- beim Entnehmen (tryPop) eines Datenelementes aus der logischen Warteschlange (WS) durch einen auf einem Prozessorkern (Cᵢ) ausgeführten Verbraucher-Thread (V) dieser Verbraucher-Thread (V) zunächst auf diejenige physikalische Warteschlange (Q) zugreift, die demjenigen Prozessorkern (Cᵢ) des parallelen Rechnersystems zugeordnet ist, auf dem der Verbraucher-Thread (V) ausgeführt wird, und anschließend ein Datenelement aus dieser physikalischen Warteschlange (Q) ausliest, sofern sich dort ein Datenelement befindet und ansonsten, sofern sich kein Datenelement in derjenigen physikalischen Warteschlange (Q) befindet, auf andere zufällig selektierte physikalische Warteschlangen (Q) anderer Prozessorkerne des parallelen Rechnersystems zugreift.

10. Rechnersystem nach Anspruch 9,
wobei die Prozessoren (P) und deren Speicher (M) über ein Verbindungsnetzwerk (VNW) des Rechnersystems zur Übertragung von Datenelementen zwischen den Prozessoren (P) mittels der globalen logischen Warteschlange (WS) verbunden sind.

11. Rechnersystem nach Anspruch 9 oder 10,
wobei jeder Prozessorkern (Cᵢ) eines Prozessors (P) einen Level-1-Cache-Speicher (L1) besitzt, der an einen Level-2-Cache-Speicher (L2) des Prozessors (P) gekoppelt ist.

12. Rechnersystem nach Anspruch 11,
wobei der Level-2-Cache-Speicher des Prozessors (P) an das Verbindungsnetzwerk (VNW) des parallelen Rechnersystems angeschlossen ist.

13. Rechnersystem nach einem der vorangehenden Ansprüche 9 bis 12,
wobei das Rechnersystem ein NUMA (Non-Uniform Memory Access)-System ist.

## Claims

1. Method for transmitting data elements from source threads (E) to sink threads (V) which are executed on processor cores (Cᵢ) of a parallel computer system, by means of at least one global logical queue (WS) which has for each processor core (Cᵢ) of the parallel computer system an associated physical queue (Qᵢ) and which comprises a data element management table which stores for each source thread (E) executed on a processor core (Cᵢ) a count (Count) which specifies the total number of data elements enqueued by the respective source thread (E), and located, in one of the physical queues of the logical queue (WS), and a processor core index (CORE) which specifies the processor core (Cᵢ) in the physical queue of which the data elements enqueued there by the respective source thread (E) are located, wherein, on a data element being dequeued (tryPop) from the logical queue (WS) by a sink thread (V) executed on a processor core (Cᵢ), this sink thread (V) initially accesses the physical queue (Q) which is allocated to the processor core (Cᵢ) of the parallel computer system on which the sink thread (V) is executed and subsequently reads a data element out of this physical queue (Q) if a data element is located there, and otherwise accesses other randomly selected physical queues (Q) of other processor cores of the parallel computer system if there is no data element located in that physical queue (Q).

2. Method according to Claim 1,
wherein a thread index of the source thread is determined by a source thread (E) executed on a processor core (Cᵢ) on enqueuing (push) a data element in the logical queue (WS) and enqueued together with the data element coming from the source thread in the physical queue of the processor core (Cᵢ) on which the source thread (E) is executed if the count (Count), stored in the data element management table of the logical queue (WS), of the executed source thread (E) is zero and specifies that there is no data element coming from the source thread (E) located in one of the physical queues of the logical queue (WS) as yet.

3. Method according to Claim 1 or 2,
wherein, if the count (Count), stored in the data element management table of the logical queue, of the source thread (E) is not zero and specifies that data elements coming from the source thread (E) are already located in one of the physical queues of the logical queue (WS), the found thread index of the source thread (E), together with the data element coming from the source thread (E), is enqueued in the physical queue (Q) in which the data elements coming from the source thread (E) are already located.

4. Method according to Claim 1,
wherein the logical queue (WS) returns an error message (false) to the sink thread (V) if there is no data element located in the physical queues (Q) of the other processor cores (C) either.

5. Method according to one of the preceding Claims 1 to 4, wherein the physical queues (Q) of the logical queue (WS) are in each case formed by a FIFO queue which comprises a number of memory elements sequentially linked to one another.

6. Method according to Claim 5,
wherein a memory element of a physical queue (Q) stores a data element and its associated thread index, the latter specifying the source thread (E) from which the data element comes.

7. Method according to one of the preceding Claims 1 to 6, wherein the physical queues (Q) of all processor cores (C) of a processor (P) are provided in a memory (M) belonging to the processor (P).

8. Method according to one of the preceding Claims 1 to 7, wherein the number of the threads executed on the processor cores (Cᵢ) of the parallel computer system are monitored and the method for transmitting data elements from source threads (E) to sink threads (V) is executed when the monitored number of threads exceeds an adjustable threshold value.

9. Computer system having a number of processors (P) which have in each case a number of processor cores (Cᵢ), wherein
- for each processor (P)
-- a memory (M) is provided in which, for each processor core (Cᵢ) of the respective processor (P), an associated physical queue (Qᵢ) is stored which comprises a number of sequentially linked memory elements, wherein
each memory element in each case stores a data element transmitted between two threads executed on processor cores (Cᵢ) and an associated thread index which specifies a source thread (E) from which the transmitted data element comes,
the physical queues (Q) of all processor cores (Cᵢ) together form a global logical queue (WS) of the parallel computer system which has a data element management table in which, for each source thread (E) executed on a processor core (Cᵢ), a count (Count) is stored which specifies the total number of data elements enqueued by the respective source thread (E), and located, in one of the physical queues (Q) of the logical queue (WS), and
-- a processor core index (CORE) which specifies the processor core (Cᵢ) in the physical queue (Q) of which the data elements enqueued there by the respective source thread (E) are located, and,
- on a data element being dequeued (tryPop) from the logical queue (WS) by a sink thread (V) executed on a processor core (Cᵢ), this sink thread (V) initially accesses the physical queue (Q) which is allocated to the processor core (Cᵢ) of the parallel computer system on which the sink thread (V) is executed and subsequently reads a data element out of this physical queue (Q) if a data element is located there, and otherwise accesses other randomly selected physical queues (Q) of other processor cores of the parallel computer system if there is no data element located in that physical queue (Q).

10. Computer system according to Claim 9,
wherein the processors (P) and their memories (M) are connected via an interconnection network (VNW) of the computer system for the purpose of transmitting data elements between the processors (P) by means of the global logical queue (WS).

11. Computer system according to Claim 9 or 10,
wherein each processor core (Cᵢ) of a processor (P) has a level-1 cache memory (L1) which is coupled to a level-2 cache memory (L2) of the processor (P).

12. Computer system according to Claim 11,
wherein the level-2 cache memory of the processor (P) is connected to the interconnection network (VNW) of the parallel computer system.

13. Computer system according to one of the preceding Claims 9 to 12,
wherein the computer system is a NUMA (Non-Uniform Memory Access) system.

## Revendications

1. Procédé de transmission d'éléments de données de thread producteurs (E) vers des thread consommateurs (V), qui sont exécutés sur des coeurs de processeur (Cᵢ) d'un système informatique parallèle, au moyen d'au moins une file d'attente logique globale (WS) qui comporte, pour chaque coeur de processeur (Cᵢ) du système informatique parallèle, une file d'attente physique associée (Qᵢ) et qui comprend une table de gestion d'éléments de données qui, pour chaque thread producteur (E) exécuté sur un coeur de processeur (Cᵢ), sauvegarde une valeur de comptage (Count) qui indique le nombre total des éléments de données classés par le thread producteur respectif (E) dans l'une des files d'attente physiques de la file d'attente logique (WS) et y figurant ainsi qu'un index de coeur de processeur (CORE) qui indique le coeur de processeur (Cᵢ) dans la file d'attente physique duquel se trouvent les éléments de données y classés par le thread producteur respectif (E), lors du retrait (tryPop) d'un élément de données de la file d'attente logique (WS) par un thread consommateur (V) exécuté sur un coeur de processeur (Cᵢ) ce thread consommateur (V) accédant tout d'abord à la file d'attente physique (Q) qui est associée au coeur de processeur (Cᵢ) du système informatique parallèle sur lequel est exécuté le thread consommateur (V), puis lisant un élément de données de cette file d'attente physique (Q), dans la mesure où un élément de données s'y trouve, et accédant sinon, en l'absence d'élément de données dans cette file d'attente physique (Q), à d'autres files d'attente physiques (Q) sélectionnées aléatoirement d'autres coeurs de processeur du système informatique parallèle.

2. Procédé selon la revendication 1, lors du classement (push) d'un élément de données dans la file d'attente logique (WS) par un thread producteur (E) exécuté sur un coeur de processeur (Cᵢ) un index de thread du thread producteur étant déterminé et classé ensemble avec l'élément de données issu du thread producteur dans la file d'attente physique du coeur de processeur (Cᵢ) sur lequel est exécuté le thread producteur (E) si la valeur de comptage (Count) du thread producteur exécuté (E) stockée dans la table de gestion d'éléments de données de la file d'attente logique (WS) est nulle et indique qu'il n'y a pas encore d'élément de données issu du thread producteur (E) dans l'une des files d'attente physiques de la file d'attente logique (WS).

3. Procédé selon la revendication 1 ou 2, l'index de thread déterminé du thread producteur (E) étant, si la valeur de comptage (Count) du thread producteur (E) stockée dans la table de gestion d'éléments de données de la file d'attente logique n'est pas nulle et si elle indique qu'il y a déjà des éléments de données issus du thread producteur (E) dans l'une des files d'attente physiques de la file d'attente logique (WS), classé ensemble avec l'élément de données issu du thread producteur (E) dans la file d'attente physique (Q) dans laquelle se trouvent déjà les éléments de données issus du thread producteur (E).

4. Procédé selon la revendication 1, la file d'attente logique (WS) restituant un message d'erreur (false) au thread consommateur (V) s'il n'y a pas non plus d'élément de données dans les files d'attente physiques (Q) des autres coeurs de processeur (C).

5. Procédé selon l'une des revendications précédentes 1 à 4, les files d'attente physiques (Q) de la file d'attente logique (WS) étant formées respectivement par une file d'attente FIFO qui comprend plusieurs éléments de mémoire associés séquentiellement entre eux.

6. Procédé selon la revendication 5, un élément de mémoire d'une file d'attente physique (Q) sauvegardant un élément de données et son index de thread associé qui indique de quel thread producteur (E) est issu l'élément de données.

7. Procédé selon l'une des revendications précédentes 1 à 6, les files d'attente physiques (Q) de tous les coeurs de processeur (C) d'un processeur (P) étant prévues dans une mémoire (M) associée au processeur (P).

8. Procédé selon l'une des revendications précédentes 1 à 7, le nombre de thread exécutés sur les coeurs de processeur (Cᵢ) du système informatique parallèle étant surveillé et le procédé de transmission d'éléments de données de thread producteurs (E) vers des thread consommateurs (V) étant exécuté lorsque le nombre de thread surveillé dépasse une valeur seuil réglable.

9. Système informatique comportant plusieurs processeurs (P), qui comportent chacun plusieurs coeurs de processeur (Cᵢ),
- pour chaque processeur (P)
-- étant prévue une mémoire (M) dans laquelle est sauvegardée, pour chaque coeur de processeur (Cᵢ) du processeur respectif (P), une file d'attente physique associée (Qᵢ) qui comprend plusieurs éléments de mémoire associés séquentiellement,
chaque élément de mémoire sauvegardant respectivement un élément de données transmis entre deux thread exécutés sur des coeurs de processeur (Cᵢ) et un index de thread associé qui indique un thread producteur (E) dont est issu l'élément de données transmis,
les files d'attente physiques (Q) de tous les coeurs de processeur (Cᵢ) formant ensemble une file d'attente logique globale (WS) du système informatique parallèle, laquelle comporte une table de gestion d'éléments de données dans laquelle sont sauvegardés, pour chaque thread producteur (E) exécuté sur un coeur de processeur (Cᵢ) une valeur de comptage (Count) qui indique le nombre total des éléments de données classés par le thread producteur respectif (E) dans l'une des files d'attente physiques (Q) de la file d'attente logique (WS) et y figurant et
-- un index de coeur de processeur (CORE) qui indique le coeur de processeur (Cᵢ) dans la file d'attente physique (Q) duquel se trouvent les éléments de données y classés par le thread producteur respectif (E), et,
- lors du retrait (tryPop) d'un élément de données de la file d'attente logique (WS) par un thread consommateur (V) exécuté sur un coeur de processeur (Cᵢ), ce thread consommateur (V) accédant tout d'abord à la file d'attente physique (Q) qui est associée au coeur de processeur (Cᵢ) du système informatique parallèle sur lequel est exécuté le thread consommateur (V), puis lisant un élément de données de cette file d'attente physique (Q), dans la mesure où un élément de données s'y trouve, et accédant sinon, en l'absence d'élément de données dans cette file d'attente physique (Q), à d'autres files d'attente physiques (Q) sélectionnées aléatoirement d'autres coeurs de processeur du système informatique parallèle.

10. Système informatique selon la revendication 9, les processeurs (P) et leurs mémoires (M) étant reliés via un réseau de liaison (VNW) du système informatique pour la transmission d'éléments de données entre les processeurs (P) au moyen de la file d'attente logique globale (WS).

11. Système informatique selon la revendication 9 ou 10, chaque coeur de processeur (Cᵢ) d'un processeur (P) possédant une mémoire cache de niveau 1 (L1) qui est couplée à une mémoire cache de niveau 2 (L2) du processeur (P).

12. Système informatique selon la revendication 11, la mémoire cache de niveau 2 du processeur (P) étant raccordée au réseau de liaison (VNW) du système informatique parallèle.

13. Système informatique selon l'une des revendications précédentes 9 à 12, le système informatique étant un système NUMA (Non-Uniform Memory Access).
